(19) Europäisches Patentamt / European Patent Office / Office européen des brevets

(11) **EP 4 244 875 B1**

(12) **EUROPÄISCHE PATENTSCHRIFT**

(45) Veröffentlichungstag und Bekanntmachung des Hinweises auf die Patenterteilung:
**27.08.2025 Patentblatt 2025/35**

(21) Anmeldenummer: **21806743.7**

(22) Anmeldetag: **12.11.2021**

(51) Internationale Patentklassifikation (IPC):
*H01C 7/10* *(2006.01)*

(52) Gemeinsame Patentklassifikation (CPC):
**H01C 7/102; H01C 7/1006; H01C 7/115; H01C 17/06586;** H01C 7/105; H01C 17/06533

(86) Internationale Anmeldenummer:
**PCT/EP2021/081454**

(87) Internationale Veröffentlichungsnummer:
**WO 2022/101374 (19.05.2022 Gazette 2022/20)**

(54) **VERFAHREN ZUR VARIABLEN EINSTELLUNG DER ELEKTRISCHEN ISOLIEREIGENSCHAFTEN VON VARISTOR-HALTIGEN MATERIALIEN**

METHOD FOR VARIABLY ADJUSTING THE ELECTRICAL INSULATING CHARACTERISTICS OF VARISTOR CONTAINING MATERIALS

DISPOSITIF D'ADJUSTEMENT VARIABLE DES CARACTÉRISTIQUES ÉLECTRIQUES D'ISOLATION DE MATÉRIAUX CONTENANT VARISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2020 EP 20207842**

(43) Veröffentlichungstag der Anmeldung:
**20.09.2023 Patentblatt 2023/38**

(73) Patentinhaber: **Merck Patent GmbH 64293 Darmstadt (DE)**

(72) Erfinder:
• **BAUER, Johann 64293 DARMSTADT (DE)**
• **DELP, Tanja 64293 DARMSTADT (DE)**

(74) Vertreter: **Merck Patent Association Merck Patent GmbH 64271 Darmstadt (DE)**

(56) Entgegenhaltungen:
US-A- 4 726 991    US-B2- 7 651 636
US-B2- 9 208 931

**Beschreibung**

Die vorliegende Erfindung bezieht sich auf ein Verfahren zur variablen Einstellung der elektrischen Isoliereigenschaften von Varistor-haltigen Kompositmaterialien mit Hilfe von definierten Füllstoffmischungen, auf die Verwendung solcher Füllstoffmischungen, sowie auf Kompositmaterialien mit resistiven und kapazitiven Feldsteuerungseigenschaften, enthaltend derartige Füllstoffmischungen.

Varistor-Füllstoffe werden zur Herstellung feldsteuernder Isolierkomposite auf der Basis von Polymeren eingesetzt. Schon lange sind partikuläre Füllstoffe, die Siliziumcarbid oder Zinkoxid enthalten bzw. daraus bestehen, als Varistor-Füllstoffe in Polymeren gebräuchlich. Inzwischen werden aber auch Partikel aus Titancarbid, Titansuboxid (vorzugsweise TiO) oder auch elektrisch leitfähige Partikel aus Kupfer oder Carbon Black in verschiedene Polymersysteme eingebracht, um dort feldsteuernde Eigenschaften zu erzeugen.

Als Polymermatrix werden verschiedene Systeme in Form von Beschichtungen oder Formmassen verwendet, die beispielsweise aus Silikonen, EPDM (Ethylen-Propylen-Dien-Monomer), Polyurethanen, Polyethylenen, Epoxiden oder Phenolharzen bestehen.

Ziel des Einsatzes der funktionellen Füllstoffe ist eine kontrollierte Feldsteuerung oder auch ein Überspannungsschutz im Anwendungsmedium.

Die dafür eingesetzten funktionellen Füllstoffe werden auch als Varistoren ("Variable" + "Resistor") bezeichnet. Sie sind dadurch charakterisiert, dass ihre elektrische Leitfähigkeit im Anwendungsmedium von der anliegenden Feldstärke abhängt, also nichtlinear auftritt.

Solche Füllstoffe eignen sich besonders zum Einsatz in Anwendungsmedien und dem Schutz der dort verwendeten Werkstoffe, in denen hohe konstante oder veränderliche Feldstärken auftreten.

Typische Einsatzgebiete sind hier die Feldsteuerung an Hochspannungskabeln, zu deren Verbindung untereinander beispielsweise in Muffen oder auch an Endverschlüssen die Hauptisolation entfernt wird und sich an den Grenzflächen von elektrisch leitfähigen und isolierenden Bauteilen große Feldstärkengradienten aufbauen (electrical stress) oder aber auch für den Überspannungsschutz gegen transiente Belastungen wie Schaltspannungen, Blitzschlag oder Entladungen. Weitere Einsatzgebiete bestehen auch in der Feldsteuerung von Vergussmassen und Kontakten von Schaltungen der Leistungselektronik (high power electronics).

Mit Varistormaterialien gefüllte polymere Anwendungsmedien zeigen sowohl Eigenschaften einer resistiven als auch einer kapazitiven Feldsteuerung. Daher eignen sich diese Materialien sowohl für den Einsatz in Gleichspannungsanwendungen als auch in Wechselspannungsanwendungen und können auch transiente Vorgänge (Impulse) abfangen. Die Ursache dafür liegt in einem wohldosierten Spannungsabfall zwischen der Hochspannungsquelle (z.B. Leiter in einem Kabel) und der Erdung (z.B. Außenleiter) über das mit dem Varistor gefüllte Anwendungsmedium. Auf Grund der nichtlinearen elektrischen Eigenschaften des Varistormaterials (Leitfähigkeit) und durch seine geringfügig erhöhte Dielektrizitätszahl bei einem gleichzeitig geringen Verlust (tan $\delta$) kommt es zu einer Vergleichmäßigung des elektrischen Feldes (resistive und kapazitive Feldsteuerung).

Die heute bekannten Varistor-Füllstoffe zeichnen sich dadurch aus, dass sie im Anwendungsmedium entweder abhängig von der Art ihrer Synthese gezielt (ZnO, $SnO_2$, TiO) oder zufällig (SiC) eine bestimmte Kennlinienform (E/J-Diagramm oder auch E/p-Diagramm) aufweisen, die sich durch eine Änderung der Konzentration dieses Füllstoffs im Anwendungsmedium nur bedingt verschieben lässt, da sich dadurch auch häufig mehrere andere Parameter verschieben würden. Wenn also die elektrische Leitfähigkeit eines Kompositmaterials durch eine Konzentrationsänderung des jeweiligen Varistor-Füllstoffs verändert werden soll, ändert sich auch der Schaltpunkt des Kompositmaterials. Sinkt beispielsweise mit wachsendem Füllgrad (Perkolationseffekt) der spezifische Widerstand des Kompositmaterials (p), wandert der Schaltpunkt gleichzeitig in unerwünschter Weise zu niedrigeren Feldstärken (E), d.h. die elektrische Festigkeit im Sinne einer "Isolationsfestigkeit" des Kompositmaterials nimmt ab.

Ein hoher Füllgrad mit Varistor-Füllstoffen in Polymeren kann, ebenso wie allgemein auch mit anderen Füllstoffen, zu Schwierigkeiten bei der mechanischen Festigkeit solcher Kompositmaterialien führen. Solche hoch gefüllten Polymermaterialien werden brüchig und sind mechanischem Druck nicht mehr ausreichend gewachsen. Es wäre daher vorteilhaft, den Füllgrad von Polymermaterialien mit Füllstoffen allgemein und insbesondere mit Varistor-Füllstoffen auf ein verträgliches Maß beschränken zu können, ohne die mechanische Festigkeit der entsprechenden Kompositmaterialien zu gefährden oder die Ableitfähigkeit des Materials zu gering auszulegen. Darüber hinaus wäre es vorteilhaft, den spezifischen Widerstand von Kompositmaterialien in Bezug auf die jeweiligen Erfordernisse des Anwendungsmediums variabel einstellen zu können. Zusätzlich ist es erforderlich, dass die entsprechenden Füllstoffe homogen in der Polymermatrix verteilt sind, damit im Anwendungsmedium keine lokalen Unterschiede in der Ableitfähigkeit des Materials auftreten.

Bezüglich einer optimalen homogenen Verteilung von Varistor-Füllstoffen in der Polymermatrix ist der nunmehrigen Patentanmelderin die Entwicklung eines Mikrovaristor-Füllstoffs gelungen, der auf der Basis seiner materiellen Zusammensetzung und seiner daraus folgenden geringen Dichte eine außerordentlich geringe Absetzneigung im Anwendungsmedium zeigt und darüber hinaus über sehr gute nichtlineare elektrische Eigenschaften verfügt. Zusammensetzung, Herstellung und Verwendung dieses Mikrovaristor-Füllstoffs sind in der Patentanmeldung WO 2021/105319 A1 derselben Patentanmelderin beschrieben. Auf den Inhalt dieser Patentanmeldung wird hier in vollem Umfang Bezug genommen.

Die in WO 2021/105319 A1 beschriebenen Mikrovaristor-Füllstoffe weisen jedoch ebenfalls in einer sie enthaltenden dielektrischen Polymermatrix ein E/p-Diagramm auf, bei dem sich mit steigendem Gewichtsanteil an Mikrovaristor-Füllstoff in der Polymermatrix zwar der spezifische Widerstand des Kompositmaterials absenken lässt, gleichzeitig aber ein Ableitstrom bereits bei einer geringeren Feldstärke fließt, was zu einer geringeren elektrischen Festigkeit des Kompositmaterials führt.

Das Dokument US 4 726 991 A offenbart ein Verfahren nach dem Oberbegriff des Anspruchs 1.

Die Aufgabe der vorliegenden Erfindung besteht daher darin, ein Verfahren zur Verfügung zu stellen, mit Hilfe dessen die Isoliereigenschaften von Varistor-haltigen Kompositmaterialien auf Basis dielektrischer Polymere mittels einer geringen Anzahl und Konzentration an Füllstoffen variabel je nach Anwendungserfordernissen einstellbar sind, wobei die Füllstoffe homogen in der Polymermatrix verteilt vorliegen und wobei die elektrische Festigkeit der Kompositmaterialien weitestgehend oder vollständig erhalten bleibt.

Eine weitere Aufgabe der vorliegenden Erfindung besteht darin, geeignete Füllstoffe aufzuzeigen, die zur variablen Einstellung der elektrischen Isoliereigenschaften von Varistor-haltigen Kompositmaterialien geeignet sind.

Darüber hinaus besteht eine zusätzliche Aufgabe der Erfindung darin, Kompositmaterialien mit resistiven und kapazitiven Feldsteuerungseigenschaften bereitzustellen, deren elektrische Isoliereigenschaften nach den Erfordernissen des jeweiligen Anwendungsmediums variabel mittels einer geringen Anzahl und Konzentration an Füllstoffen einstellbar sind.

Die Aufgabe der vorliegenden Erfindung wird gelöst durch ein Verfahren nach Anspruch 1.

Es wurde überraschend gefunden, dass sich die elektrischen Isoliereigenschaften von Varistor-haltigen Kompositmaterialien bedarfsorientiert einstellen lassen, wenn das Kompositmaterial neben einem partikulären Mikrovaristor-Füllstoff (A) noch einen anderen partikulären Füllstoff (B) enthält, dessen elektrische Leitfähigkeit entweder größer ist als die elektrische Leitfähigkeit des Mikrovaristor-Füllstoffs, aber ebenfalls im halbleitfähigen Bereich liegt, oder dessen elektrische Leitfähigkeit niedriger ist als die des Mikrovaristor-Füllstoffs. Werden die einen oder die anderen partikulären Füllstoffe (B) im Gemisch mit einem partikulären MikrovaristorFüllstoff (A) in einer dielektrischen Polymermatrix eingesetzt, lässt sich der spezifische elektrische Widerstand des jeweiligen Kompositmaterials bedarfsgerecht einstellen, ohne dass der prozentuale Gesamtfüllstoffanteil im Vergleich zum alleinigen Einsatz des Mikrovaristor-Füllstoffs erhöht oder erniedrigt werden muss. Damit bleibt die elektrische Festigkeit des Kompositmaterials nahezu unberührt, da sich der Schaltpunkt des Kompositmaterials gegenüber dem alleinigen Einsatz des Mikrovaristor-Füllstoffs praktisch kaum verändert (d.h. erst ab einer gewissen Feldstärke fließt ein Ableitstrom).

Um eine homogene Verteilung des Mikrovaristor-Füllstoffs in der Polymermatrix zu erreichen ist es vorteilhaft, wenn der MikrovaristorFüllstoff eine vergleichsweise geringe Dichte aufweist, deren Unterschied zur Dichte des Polymermaterials so gering wie möglich ausfällt, um ein Absetzen des Mikrovaristor-Füllstoffs während der Herstellung des Kompositmaterials zu minimieren oder zu vermeiden.

Bekannte Mikrovaristor-Füllstoffe aus dotiertem Zinkoxid weisen eine außerordentlich hohe Dichte von 5,5 bis 6,5 $g/cm^3$ auf, je nach dem Grad der durch den bei deren Herstellung verwendeten Sinterprozess erzielten Verdichtung. Da die Dichte dieser Mikrovaristorpartikel deutlich größer ist als die Dichte des polymeren Anwendungsmediums, neigen diese Varistor-Füllstoffe bereits während der Präparation der Gemische mit dem polymeren Anwendungsmedium stark zum Absetzen, was eine homogene und dauerhafte Durchmischung der Materialien erschwert. Die unregelmäßige Zusammensetzung des Anwendungsmediums führt entsprechend zu Unregelmäßigkeiten in dessen elektrischen Eigenschaften. Aus diesem Grunde sind Zinkoxid-haltige Mikrovaristor-Füllstoffe für den Einsatz im erfindungsgemäßen Verfahren nicht geeignet.

Im Gegensatz dazu haben sich die in der oben bereits erwähnten Patentanmeldung WO 2021/105319 A1 derselben Patentanmelderin beschriebenen Mikrovaristor-Füllstoffe als für das erfindungsgemäße Verfahren besonders geeignet erwiesen, weil sie eine nur geringe Dichte im Bereich von 1,5 bis 4,5 $g/cm^3$ bei einer mittleren Partikelgröße im Bereich von 1 bis 150 $\mu$m aufweisen und sich damit sehr gut homogen in einer polymeren Matrix verteilen lassen. Gleichmäßige nichtlineare elektrische Eigenschaften lassen sich dadurch homogen in den entsprechenden Kompositmaterialien einstellen.

Bei den genannten Mikrovaristor-Füllstoffen gemäß WO 2021/105319 A1 handelt es sich um partikulären Füllstoffe, welche aus Trägerpartikeln und einer die Trägerpartikel jeweils umhüllenden Beschichtung bestehen, wobei die Trägerpartikel mindestens eine Aluminiumverbindung oder Siliziumverbindung enthalten oder jeweils aus dieser bestehen und die Beschichtung ein mit Niob und mindestens einem weiteren Element dotiertes Titandioxid enthält.

Als besonders geeignete Aluminiumverbindungen kommen dabei Aluminiumoxid ($Al_2O_3$) oder natürliche und synthetische Alumosilikate verschiedener Zusammensetzung in Betracht. Eine besonders geeignete Siliziumverbindung stellt Siliziumdioxid ($SiO_2$) dar, welches in kristalliner und besonders bevorzugt in amorpher Form, beispielsweise als Kieselgur, eingesetzt werden kann.

Materialien, die aus Alumosilikaten bestehen oder solche enthalten sind beispielsweise Mullit, Flugasche, Kaolinit, Bimsstein oder Perlit. Besonders bevorzugt können Mullit und Flugasche eingesetzt werden.

Darüber hinaus sind Trägerpartikel geeignet, die aus einer Mischung aus einem Alumosilikat mit Aluminiumoxid und/oder Siliziumdioxid bestehen.

Die Trägerpartikel für die erfindungsgemäß bevorzugt eingesetzten partikulären Mikrovaristor-Füllstoffe A können verschiedene Formen aufweisen. Im Hinblick auf die späteren Anwendungsmedien und deren spezielle Anforderungen eignen sich insbesondere plättchenförmige oder kugelförmige Trägerpartikel, oder aber auch Trägerpartikel, die eine isotrop unregelmäßige Form aufweisen. Die Form der Trägerpartikel wird auch nach der Beschichtung mit dem dotierten Titandioxid beibehalten.

Die Dichte der eingesetzten partikulären Mikrovaristor-Füllstoffe A liegt im Bereich von 1,5 bis 4,5 g/cm$^3$, vorzugsweise im Bereich von 1,5 bis 3,0 g/cm$^3$ und insbesondere im Bereich von 1,5 bis 2,5 g/cm$^3$. Sie setzt sich bei den in WO 2021/105319 A1 beschriebenen Mikrovaristor-Füllstoffen zusammen aus dem Mittelwert der Dichten von Trägerpartikel und Beschichtung und kann durch die entsprechende Materialwahl insbesondere der Trägerpartikel jeweils an die Erfordernisse im Anwendungsmedium angepasst werden.

Die Trägerpartikel des partikulären Mikrovaristor-Füllstoffs gemäß WO 2021/105319 A1 sind jeweils von einer Beschichtung umhüllt, die ein dotiertes Titandioxid enthält, welches mit Niob und mindestens einem weiteren Element dotiert ist. Dabei umhüllt die Beschichtung jeden Trägerpartikel einzeln und liegt separat auf diesem vor, bildet also keine zusammenhängende Phase um mehrere Trägerpartikel.

Bei dem weiteren Element handelt es sich um mindestens ein Element, ausgewählt aus der Gruppe bestehend aus Mn, Cr, Ce, V, Co, Fe, Zn, Sn, Y, Zr, Ta, Ca, Sr und Ba. Bevorzugt werden als Dotierelemente Mn, Cr und Ce eingesetzt.

Besonders bevorzugt erfolgt die Dotierung in den Kombinationen:

Nb, Mn;
Nb, Mn, Cr;
Nb, Mn, Ce;
Nb, Cr;
Nb, Cr, Ce
Nb, Ce; oder
Nb, Mn, Cr, Ce,

wobei die Kombinationen Nb, Mn, Ce und Nb, Cr besonders bevorzugt sind. Die Dotierelemente liegen in kationischer Form im TiO$_2$-Kristallgitter oder an den Korngrenzen der Titandioxidgranulen vor.

Die Dotierung im Titandioxid ist jeweils in einer Menge von 0,01 bis 5 Atom-% vorhanden, bezogen auf die Anzahl der Summe aus Ti-Atomen und Atomen der Dotierelemente. Vorzugsweise liegt der Anteil der Dotierelemente (Gesamtheit der Dotierelemente) bei einem Gehalt von 0,02 bis 2 Atom-%.

Vorzugsweise besteht die Beschichtung auf den Trägerpartikeln des Mikrovaristor-Füllstoffs aus dem mehrfach dotierten Titandioxid, welches in Form von Granulen auf der Oberfläche der Trägerpartikel vorliegt und dort eine weitestgehend geschlossene, granuläre Schicht bildet.

Die Beschichtung auf dem Trägerpartikel weist jeweils eine geometrische Dicke im Bereich von 100 bis 5000 nm, vorzugsweise von 150 bis 4000 nm und insbesondere von 200 bis 2000 nm auf. Die geometrische Schichtdicke der Beschichtung lässt sich anhand von Schnittbildern (Ar-Ionenstrahl) von Einzelpartikeln des partikulären Füllstoffs leicht mittels üblicher Messmethoden (beispielsweise REM) ermitteln.

Die mittlere Partikelgröße $d_{50}$ des partikulären Mikrovaristor-Füllstoffs liegt im Bereich von 1 bis 150 μm, vorzugsweise von 2 bis 100 μm und insbesondere von 5-50 μm. Bedingt durch die Herkunft der vorab genannten Trägermaterialien isotroper Form können die Partikelgrößen der einzelnen Füllstoffpartikel in einem vergleichsweise breiten Bereich schwanken, sodass hier oft nur die Angabe der volumenbezogenen mittleren Partikelgröße $d_{50}$ sinnvoll erscheint. Auch beim Einsatz plättchenförmiger Trägerpartikel liegt in der Regel eine gewisse Schwankungsbreite der Partikelgröße der Einzelpartikel vor.

Die Partikelgröße des partikulären Mikrovaristor-Füllstoffs sowie ggf. der Trägerpartikel wird vorzugsweise über eine Laserdiffraktionsmethode bestimmt, die allgemein geläufig ist und den Vorteil hat, auch die Partikelgrößenverteilung der Partikel bestimmen zu können. Für die hier verwendeten Mikrovaristor-Füllstoffe A und deren Trägerpartikel gemäß WO 2021/105319 A1 sind die Partikelgrößen mit einem Malvern Mastersizer 3000, APA 300 (Produkt der Firma Malvern Instruments, Ltd., UK) bestimmt worden.

Weitere Details bezüglich der Eigenschaften sowie des Herstellungsverfahrens des erfindungsgemäß vorzugsweise eingesetzten MikrovaristorFüllstoffs A sind der vorab genannten Patentanmeldung WO 2021/105319 A1 zu entnehmen, deren Offenbarungsgehalt hier vollumfänglich mit eingeschlossen sein soll.

Neben dem partikulären Mikrovaristor-Füllstoff A wird dem dielektrischen Polymermaterial gemäß der vorliegenden Erfindung ein weiterer partikulärer Füllstoff, hier mit B bezeichnet, zugesetzt. Der partikuläre Füllstoff B kann entweder eine höhere elektrische Leitfähigkeit oder, alternativ, eine niedrigere elektrische Leitfähigkeit aufweisen als der partikuläre Mikrovaristor-Füllstoff A.

In einer ersten Ausführungsform weist der partikuläre Füllstoff B eine niedrigere elektrische Leitfähigkeit auf als der partikuläre MikrovaristorFüllstoff A. In diesem Falle liegt der spezifische Pulverwiderstand des partikulären Füllstoffs B erfindungsgemäß im Bereich von $\geq 10^{14}$ Ohm*cm (bei einer Messspannung von 100 V).

Solche partikulären Füllstoffe werden gemeinhin als dielektrisch bezeichnet, können jedoch bei der Einwirkung eines elektrischen Feldes mit einer hohen elektrischen Feldstärke auf das sie enthaltende Matrixmaterial dennoch zu einem Stromfluss führen.

Als besonders geeignet haben sich hier für den Einsatz in der vorliegenden Erfindung keramische Materialien herausgestellt, beispielsweise solche aus Alumosilikaten. In der vorliegenden Erfindung werden insbesondere keramische Mikrokugeln der Firma 3M mit der Bezeichnung "3M™ Ceramic Microspheres" verwendet, die eine Dichte von ca. 2,4 g/cm$^3$ aufweisen. Letztere liegt im Bereich der Dichte des partikulären Mikrovaristor-Füllstoffs A, sodass eine Mischung aus beiden Füllstoffen in der polymeren Matrix gut verteilt werden kann und auch bei der Verfestigung der erhaltenen Kompositmaterialien kein Absetzen der Füllstoffe erfolgt.

Als partikulärer Füllstoff B in der ersten Ausführungsform sind auch solche Füllstoffe geeignet, die stofflich nahezu analog zu dem oben beschriebenen partikulären Mikrovaristorfüllstoff A aufgebaut sind, deren elektrische Leitfähigkeit in der Beschichtung über eine äußerst niedrige Dotierung der Titandioxidschicht mit Nb und mindestens einem weiteren Dotierelement jedoch niedriger eingestellt ist als die des partikulären Mikrovaristorfüllstoffs A, oder die keinerlei Dotierung in der TiO$_2$-Schicht aufweisen, und die damit einen spezifischen Pulverwiderstand aufweisen, der im Bereich von $\geq 10^{14}$ Ohm*cm liegt. Die Dichte dieser Partikel entspricht im Wesentlichen der Dichte des partikulären Mikrovaristorfüllstoffs A.

In einer zweiten Ausführungsform werden als partikuläre Füllstoffe B halbleitfähige partikuläre Materialien eingesetzt, die einen spezifischen Pulverwiderstand im Bereich von $10^8$ bis $10^{12}$ Ohm*cm aufweisen, wobei sich die angegebenen Werte auf eine Messspannung von 100 V beziehen. Materialien mit einem spezifischen Pulverwiderstand von $10^{10}$ bis $10^{12}$ Ohm*cm werden besonders bevorzugt eingesetzt.

Für den Einsatz als partikuläre Füllstoffe B gemäß der vorliegenden Erfindung haben sich solche Materialien als besonders bevorzugt erwiesen, die einen Aufbau von Typ Kern-Schale und eine Dichte von < 5g/cm$^3$, insbesondere von < 4g/cm$^3$, aufweisen. Bedingt durch verschiedene Materialien von Kern und Schale lässt sich die Dichte solcher Partikel gut im genannten Bereich einstellen, sodass auch hier ein Gemisch aus partikulärem Mikrovaristor-Füllstoff A und halbleitfähigem partikulären Füllstoff B weder zu einer deutlichen Entmischung der beiden Füllstoffkomponenten noch zu einem signifikanten Absetzen dieser Füllstoffe in der Polymermatrix führt. Dadurch können stabile elektrische Eigenschaften, hier Isoliereigenschaften, im Anwendungsmedium über den gesamten Körperquer- bzw. Längsschnitt des Kompositmaterials erhalten werden.

Vorteilhafterweise werden erfindungsgemäß partikuläre Füllstoffe B eingesetzt, die auf einem Kern aus Glimmer oder Talk-Partikeln eine elektrisch halbleitfähige fest haftende Beschichtung aufweisen, die aus einem dotierten Metalloxid besteht. Dabei handelt es sich bei dem dotierten Metalloxid vorzugsweise um ein mit Antimon dotiertes Zinnoxid. Dabei ist es erforderlich, dass der Anteil am Dotierelement Antimon in der Zinnoxidbeschichtung so gering ausfällt, dass die erhaltenen beschichteten Partikel nicht elektrisch leitfähig, sondern halbleitfähig sind. Dies gelingt, wenn das Molverhältnis aus Zinn : Antimon in der Beschichtung lediglich im Bereich von 99,99:0,01 bis 97:3 liegt und wenn, bei Bedarf, die dotierte Zinnoxidschicht auf dem Kernpartikel auf ihrer Oberfläche noch von einer weiteren, dielektrischen, Metalloxidschicht bedeckt ist. Die halbleitfähigen Partikel weisen vorzugsweise eine Partikelgröße von kleiner als 15 $\mu$m auf.

Geeignete halbleitfähige partikuläre Materialien des beschriebenen Aufbaus sind kommerziell erhältlich und werden beispielsweise von der Merck KGaA, Deutschland, unter der Bezeichnung Iriotec® 7510 oder Iriotec® 7550 angeboten, wobei letzteres bevorzugt in der vorliegenden Erfindung eingesetzt wird.

Als partikulärer Füllstoff B sind jedoch auch solche Füllstoffe geeignet, die stofflich analog zu dem oben beschriebenen partikulären Mikrovaristorfüllstoff A aufgebaut sind, deren elektrische Leitfähigkeit in der Beschichtung über eine höhere Dotierung der Titandioxidschicht mit Nb und mindestens einem weiteren Dotierelement jedoch höher eingestellt ist als die des partikulären Mikrovaristorfüllstoffs A und die damit einen spezifischen Pulverwiderstand aufweisen, der im Bereich von $10^8$ bis $10^{12}$ Ohm*cm liegt. Elektrisch leitfähige partikuläre Materialien sind, auch wenn sie aus Glimmerpartikeln bestehen, die eine Beschichtung aus elektrisch leitfähigem, mit Antimon dotiertem Zinndioxid (mit einem Anteil von > 3% Antimon) aufweisen, nicht für den Einsatz in der vorliegenden Erfindung geeignet.

Die elektrischen Eigenschaften der partikulären Füllstoffe B werden durch ihren spezifischen Pulverwiderstand charakterisiert. Zur Messung des spezifischen Widerstands eines Pigmentpulvers wird ein Acrylglas-Rohr mit einem Innendurchmesser von 2 cm mit einer geringen Menge des jeweiligen Pigmentpulvers (ca. 0,5 bis g) gefüllt und mit Hilfe eines Gewichtes von 10 kg mit einem Metallstempel gegen eine Metallelektrode zusammengepresst. Aus der Schichtdicke L des komprimierten Pulvers ergibt sich der spezifische Widerstand p nach der folgenden Gleichung:

$$\rho = R* \pi* (d/2)^2/L \quad (Ohm*cm)$$

Dabei stellt R den tatsächlich gemessenen elektrischen Widerstand bei einer Messspannung von 100 V und d den Durchmesser der Pigmentsäule dar. Für den Fall, dass ein anders dimensioniertes Rohr für die Messung des spezifischen Pulverwiderstands eingesetzt werden soll, müssen die Werte für d und L in der Formel entsprechend angepasst werden.

Gemäß des erfindungsgemäßen Verfahrens werden der partikuläre Mikrovaristor-Füllstoff A und der partikuläre Füllstoff B gemeinsam einer oder mehreren definierten Masseeinheit(en) eines dielektrischen Polymermaterials zugesetzt.

Bei dem dielektrischen Polymermaterial handelt es sich erfindungsgemäß um Silikone, Polyurethane, Polyethylene, Epoxide, Phenolharze oder um EPDM. Solche dielektrischen Polymere sind allgemein gebräuchlich als Polymermatrix für Varistor-haltige Kompositmaterialien mit nichtlinearen elektrischen Eigenschaften.

Als Masseeinheit des dielektrischen Polymermaterials ist hier die für den Anwendungsfall jeweils benötigte Masse an dielektrischem Polymermaterial zu verstehen, bestimmt in den Masseeinheiten Gramm, Kilogramm, Tonne, etc.

Der jeweiligen Masseeinheit des dielektrischen Polymermaterials wird eine vordefinierte Gesamtmasse an Füllstoffen A+B zugesetzt, wobei die Gesamtmasse A+B hier in Gewichtsprozent ausgedrückt wird und bezogen ist auf das Gesamtgewicht aus der jeweiligen Masseeinheit des dielektrischem Polymermaterials einschließlich der Gesamtmasse A+B der partikulären Füllstoffe A+B.

Die Gesamtmasse A+B stellt also die Masse A+B dar, die einem bestimmten prozentualen Gewichtsanteil an Füllstoffen in der jeweiligen Masseeinheit des mit Füllstoffen versehenen dielektrischen Polymermaterials entspricht. Dieser liegt erfindungsgemäß im Bereich von 5 bis 35 Gew.-%, vorzugsweise im Bereich von 15 bis 30 Gew.%, jeweils bezogen auf das Gesamtgewicht aus der Masseeinheit des dielektrischen Polymermaterials

Wird also beispielsweise einer Masse von 150 g eines dielektrischen Polymermaterials eine Gesamtmasse von 50 g eines Gemisches aus einem partikulären Mikrovaristor-Füllstoff A und einem partikulären Füllstoff B zugesetzt, liegt die Gesamtmasse A+B, ausgedrückt in Gewichtsprozent, hier bei 25 Gew.-%.

Innerhalb der Gesamtmasse A+B kann das Masseverhältnis A:B erfindungsgemäß im Bereich von 1:99 bis 99:1 liegen. Dieses innere Masseverhältnis der partikulären Füllstoffe wird in jedem Falle davon bestimmt, welche elektrisch isolierenden Eigenschaften im finalen Kompositmaterial eingestellt werden sollen.

Ausgangspunkt für eine spezielle Anpassung der elektrisch isolierenden Eigenschaften von Varistor-haltigen Kompositmaterialien ist in jedem Falle ein Kompositmaterial, welches eine vordefinierte Masse eines dielektrischen Polymermaterials sowie eine ebenso definierte Masse (ausgedrückt in Gew.-%) des partikulären Mikrovaristor-Füllstoffs A enthält.

Nachdem die jeweilige Mischung in eine zylindrische Prüfkörperform überführt und ausgehärtet ist, wird der Prüfkörper in eine entsprechende Vorrichtung überführt (wird später erläutert) und anhand der Messergebnisse eine E/p-Kennlinie des Materials erstellt. Diese zeigt den spezifischen Widerstand des Prüfkörpers p in Abhängigkeit zur Feldstärke E des angelegten elektrischen Feldes.

Anhand dieser Kennlinie lässt sich der spezifische Anfangswiderstand des Prüfkörpers bei einer sehr geringen Feldstärke des angelegten elektrischen Feldes sowie der Schaltpunkt bestimmen, der die Feldstärke anzeigt, bei welcher ein Ableitstrom im Prüfkörper zu fließen beginnt.

Für den Fall, dass für einen bestimmten Anwendungsfall ein höherer spezifischer Anfangswiderstand erforderlich ist, als er durch den alleinigen Einsatz des partikulären Mikrovaristor-Füllstoffs A erhalten werden kann, wird nun erfindungsgemäß ein partikulärer Füllstoff B zugesetzt, welcher eine geringere elektrische Leitfähigkeit aufweist als der partikuläre Mikrovaristor-Füllstoff A. Der spezifische Pulverwiderstand eines solchen partikulären Füllstoffs B liegt im Bereich von $\geq 10^{14}$ Ohm*cm, wie oben beschrieben.

Die Gesamtmasse A+B entspricht dabei der zur Bestimmung der Ausgangskennlinie eingesetzten Masse A. Ein bestimmter Masseanteil der ursprünglich eingesetzten Masse von A wird also durch dieselbe Masse an B ersetzt, sodass sich die Gesamtmasse an partikulären Füllstoffen in der Polymermatrix im Vergleich zur Ausgangsmessung nicht ändert. Durch Serienversuche mit einem zunehmenden Masseanteil an partikulärem Füllstoff B in der Gesamtmasse A+B bei gleichbleibender Masse A+B kann nun der gewünschte spezifische Anfangswiderstand der jeweiligen Prüfkörper erhöht werden, wobei der Schaltpunkt bei allen Prüfkörpern, die ein Gemisch aus den partikulären Füllstoffen A und B in einem beliebigen Verhältnis im Bereich von 1:99 bis 99:1 enthalten, in demselben Feldstärken-Bereich liegt. Die Schaltfestigkeit der Prüfkörper bleibt beim Zusetzen eines partikulären Füllstoffs B mit einer geringeren elektrischen Leitfähigkeit als der des partikulären Mikrovaristor-Füllstoffs A also erhalten, im Vergleich zu einem alleinigen Einsatz des partikulären Mikrovaristor-Füllstoffs A in demselben dielektrischen Polymermaterial und bei gleichbleibendem Masseanteil an partikulären Füllstoffen, die die elektrischen Isolationseigenschaften des jeweiligen Kompositmaterials bestimmen.

Werden die E/p-Kennlinien der verschiedenen Prüfkörper in einem einzigen Diagramm dargestellt, so weist jede der die partikulären Füllstoffe A und B enthaltenden Masseeinheiten des dielektrischen Polymermaterials (hier im Prüfkörper) eine E/p-Kennlinie auf, die räumlich zwischen einer E/p-Kennlinie einer Masseeinheit desselben Polymermaterials, welches lediglich den partikulären Mikrovaristor-Füllstoff A enthält, und der E/p-Kennlinie einer Masseeinheit desselben Polymermaterials, welches lediglich den partikulären Füllstoff B enthält, liegt.

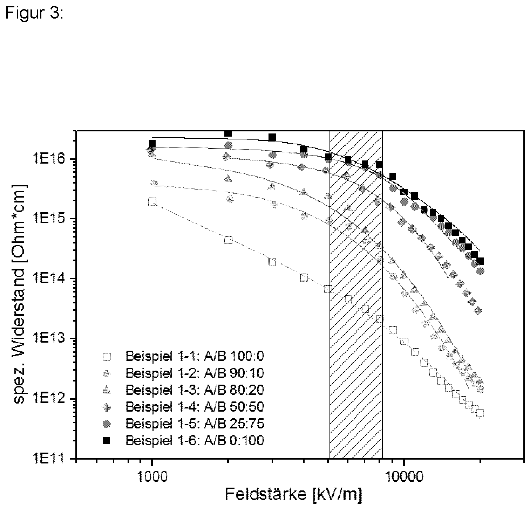

Ein entsprechendes Diagramm ist in Figur 3 dargestellt.

Wird in einem Anwendungsmedium eine höhere elektrische Leitfähigkeit und damit ein geringerer spezifischer Widerstand benötigt, als er mit dem alleinigen Einsatz des Mikrovaristor-Füllstoffs A erhalten werden kann, so werden der jeweiligen Masseeinheit des dielektrischen Polymermaterials neben dem partikulären Mikrovaristor-Füllstoff A auch ein halbleitfähiger partikulärer Füllstoff B in bei jeder Probe zunehmender Menge zugesetzt, analog zur vorherigen Beschreibung. Der halbleitende partikuläre Füllstoff B weist hier einen spezifischen Pulverwiderstand im Bereich von $10^8$ bis $10^{12}$ Ohm*cm auf, wie vorab beschrieben.

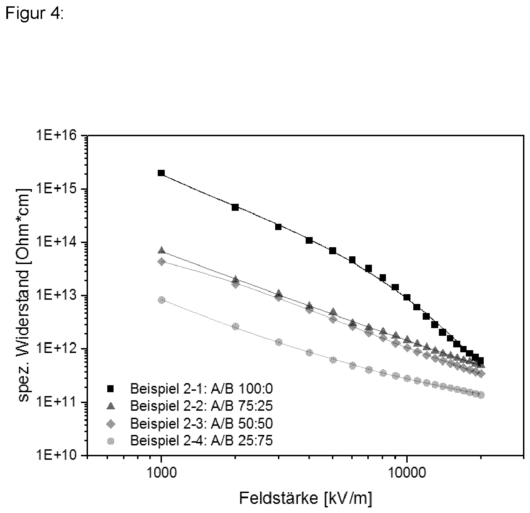

Über die Erstellung und den Abgleich der E/p-Kennlinien verschiedener Prüfkörper mit jeweils unterschiedlichen Masseanteilen A und B in der in allen Versuchen gleichbleibenden Gesamtmasse A+B kann eine Zusammensetzung eines Varistor-haltigen Kompositmaterials gefunden werden, die exakt den jeweiligen Erfordernissen des Anwendungsmediums entspricht. Ein entsprechendes Diagramm ist in Figur 4 dargestellt.

Da das innere Verhältnis A:B in der Gesamtmasse A+B je nach Bedarf individuell gesteuert werden kann, kann mit dem erfindungsgemäßen Verfahren der spezifische elektrische Widerstand eines Varistor-haltigen Kompositmaterials sehr präzise über ein Masseverhältnis A:B eingestellt werden, welches im Anwendungsmedium, analog zum entsprechend zusammengesetzten Prüfkörper, die erwünschten elektrisch isolierenden Eigenschaften erzeugt. Mit nur wenigen partikulären Füllstoffen und einer geringen Anzahl an Versuchen können erfindungsgemäß in Varistor-haltigen Kompositmaterialien elektrisch isolierende Eigenschaften eingestellt werden, die einen für das jeweilige Anwendungsmedium optimalen elektrischen Widerstand aufweisen, ohne dass die elektrische Festigkeit des Materials beeinträchtigt wird.

Gegenstand der vorliegenden Erfindung ist auch die Verwendung eines Füllstoffgemischs zur variablen Einstellung der elektrischen Isoliereigenschaften von Varistor-haltigen Kompositmaterialien, wobei das Füllstoffgemisch aus einer vordefinierten Gesamtmasse A+B aus einem partikulären Mikrovaristor-Füllstoff A und einem weiteren partikulären Füllstoff B besteht, wobei der partikuläre Füllstoff B entweder eine geringere elektrische Leitfähigkeit aufweist als der partikuläre MikrovaristorFüllstoff A oder wobei es sich bei dem partikulären Füllstoff B um ein halbleitfähiges partikuläres Material mit einer höheren elektrischen Leitfähigkeit als der partikuläre Mikrovaristor-Füllstoff A handelt, und wobei ein Masseverhältnis A:B im Bereich von 1:99 bis 99:1 in der Gesamtmasse A+B vorliegt, wobei das Füllstoffgemisch einer oder mehreren Masseeinheiten eines dielektrischen Polymermaterials zugesetzt und das Masseverhältnis A:B in jeder der Masseeinheiten gleich oder voneinander verschieden eingestellt wird.

Details in Bezug auf die materielle Zusammensetzung und die spezifischen Pulverwiderstände der partikulären Füllstoffe A und B sind vorab bereits beschrieben worden.

Werden zur Bestimmung der optimalen stofflichen und prozentualen Zusammensetzung der partikulären Füllkörper wie oben beschrieben Serienversuche in Prüfkörpern unternommen, wird die vordefinierte Gesamtmasse A+B in jeder der Masseeinheiten des dielektrischen Polymermaterials gleich sein. Lediglich das Verhältnis A:B wird in jedem Prüfkörper und damit in jeder der Masseeinheiten des dielektrischen Polymermaterials unterschiedlich ausgewählt. Ist auf diese Weise die optimale Zusammensetzung des Prüfkörpers gefunden, kann gemäß dessen stofflicher Zusammensetzung ein Varistor-haltiges Kompositmaterial erzeugt werden, welches ein dielektrisches Polymermaterial und ein Füllstoffgemisch aus den Komponenten A und B wie oben beschrieben enthält. In diesem Kompositmaterial, welches zur Anwendung als elektrisch isolierendes Material mit nichtlinearen elektrischen Eigenschaften gedacht ist, ist sowohl die Gesamtmasse A+B als auch das Verhältnis A:B in jedem Falle gleich, unabhängig davon, wie viele Masseeinheiten des dielektrischen Polymermaterials einzeln mit den Komponenten A und B versetzt werden müssen um eine geeignete Masse an Varistor-haltigem Kompositmaterial für den jeweiligen Anwendungszweck zur Verfügung zu haben. Die Gesamtmasse der partikulären Füllstoffe A+B, ausgedrückt in Gewichtsprozent, liegt dabei in jedem Falle im Bereich von 5 bis 35 Gew.-%, vorzugsweise im Bereich von 15 bis 30 Gew.-%, jeweils bezogen auf das Gesamtgewicht aus der jeweiligen Masseeinheit des dielektrischen Polymermaterials einschließlich der Gesamtmasse A+B der partikulären Füllstoffe A und B.

Es versteht sich von selbst, dass die oben bereits beschriebenen Materialien für die dielektrischen Polymermaterialien sowie für den partikulären Mikrovaristor-Füllstoff A und die partikulären Füllstoffe B hier zum Einsatz gelangen. Eine nochmalige detaillierte Beschreibung ist an dieser Stelle daher nicht erforderlich.

Gegenstand der vorliegenden Erfindung ist auch ein Varistor-haltiges Kompositmaterial mit resistiven und kapazitiven Feldsteuerungseigen schaften, enthaltend Masseeinheiten eines dielektrischen Polymer materials, sowie einen partikulären Mikrovaristor-Füllstoff A und einen weiteren partikulärer Füllstoff B in einer vordefinierten Gesamtmasse A+B in jeder Masseeinheit des dielektrischen Polymermaterials, wobei der partikuläre Füllstoff B eine geringere elektrische Leitfähigkeit aufweist als der partikuläre Mikrovaristor-Füllstoff A oder wobei es sich bei dem partikulären Füllstoff B um ein halbleitfähiges partikuläres Material mit einer höheren Leitfähigkeit als der partikuläre Mikrovaristor-Füllstoff A handelt, und wobei in jeder der die partikulären Füllstoffe A+B enthaltenden Masseeinheiten des Polymermaterials dasselbe Masseverhältnis A:B vorliegt und das Masseverhältnis A:B im Bereich von 1:99 bis 99:1 liegt.

In diesem Varistor-haltiges Kompositmaterial liegt die Gesamtmasse A+B in jeder der Masseeinheiten im Bereich von 5 bis 35 Gew.-%, bezogen auf das Gesamtgewicht aus der Masseeinheit des dielektrischem Polymer materials einschließlich der Gesamtmasse A+B der partikulären Füllstoffe A und B.

Bei dem dielektrischen Polymermaterial in diesem Kompositmaterial handelt es sich erfindungsgemäß um resistiv bzw. kapazitiv feldsteuernde Eigenschaften aufweisen um Silikone, Polyurethane, Polyethylene, Epoxide, Phenolharze oder um EPDM.

Die Art der partikulären Füllstoffe A und B sowie die Bestimmung der jeweils optimalen prozentualen Zusammensetzung des Füllstoffgemisches A+B wird anhand von wenigen Serienversuchen in Prüfkörpern wie oben beschrieben ermittelt. Gemäß der so gefundenen Zusammensetzung wird ein Varistor-haltiges Kompositmaterial mit resistiven und kapazitiven Feldsteuerungseigenschaften erzeugt, welches in optimaler Weise an die jeweiligen Anwendungsverhältnisse angepasst ist und in diversen Anwendungsmedien eingesetzt werden kann. Als Einsatzgebiete kommen solche in Frage, in denen üblicherweise Varistor-haltige Materialien eingesetzt werden, beispielsweise die Feldsteuerung an Hochspannungskabeln, zu deren Verbindung untereinander beispielsweise in Muffen oder auch an Endverschlüssen die Hauptisolation entfernt wird und sich an den Grenzflächen von elektrisch leitfähigen und isolierenden Bauteilen große Feldstärkengradienten aufbauen (electrical stress) oder der Überspannungsschutz gegen transiente Belastungen wie Schaltspannungen, Blitzschlag oder Entladungen. Weitere Einsatzgebiete sind die Feldsteuerung von Vergussmassen und Kontakten von Schaltungen der Leistungselektronik. Es sind Anwendungen für Gleichspannung sowie für Wechselspannung möglich.

Die vorliegende Erfindung stellt für den jeweiligen Anwendungszweck optimierte Varistor-haltige Kompositmaterialien sowie ein Verfahren zur Verfügung, mit Hilfe dessen eine derartige optimierte Zusammensetzung der Kompositmaterialien ermittelt werden kann. Mit Hilfe einer geringen Anzahl an Füllstoffen und den üblicherweise für solche Kompositmaterialien eingesetzten dielektrischen Polymermaterialien lassen sich Varistor-haltige Kompositmaterialien mit homogener Zusammensetzung erhalten, die elektrisch isolierende und gleichzeitig resistiv oder kapazitiv feldsteuernde Eigenschaften und eine hohe elektrische Festigkeit aufweisen.

**Figur 1:** zeigt die schematische Schaltung der Messanordnung (1b, unten) mit Spannungsquelle (DC), integrierter Spannungsmessung (U), Pico-Amperemeter (A) und Prüfkörper, sowie den zylindrischen Prüfkörper mit den relevanten Abmessungen (1a, oben) zur Ermittlung der elektrischen Messergebnisse für die Erstellung einer E/p-Kennlinie.

**Figur 2:** zeigt die charakteristische DC Feldstärke-spezifischer Widerstand-Kennlinie (E/p) eines Füllstoffs gemäß den Beispielen 5-10 bis 5-14 aus WO 2021/105319 A1 in RTV-2 Silikon mit Pigmentmassekonzentrationen von 15, 20, 25, 30 und 35 Gew.%. Die Bereiche für die Schaltpunkte sind schraffiert unterlegt.

**Figur 3:** zeigt die charakteristische DC Feldstärke-spezifischer Widerstand-Kennlinie (E/p) eines Füllstoffs gemäß Beispiel 1 der vorliegenden Erfindung in RTV-2 Silikon mit verschiedenen Verhältnissen der Füllstoffe A:B. Die Bereiche für die Schaltpunkte sind schraffiert unterlegt.

**Figur 4:** zeigt die charakteristische DC Feldstärke-spezifischer Widerstand-Kennlinie (E/p) eines Füllstoffs gemäß Beispiel 2 der vorliegenden Erfindung in RTV-2 Silikon mit verschiedenen Verhältnissen der Füllstoffe A:B.

Die Erfindung soll nachfolgend anhand von Beispielen beschrieben werden, jedoch nicht auf diese beschränkt sein.

**Beispiele:**

**Herstellung von partikulären Füllstoffen:**

Herstellung eines partikulären Mikrovaristor-Füllstoffs A:

100 g sphärische Alumosilikat Partikel (BET 0,50 $m^2$/g Dichte 2,45 g/$cm^3$, Partikelgröße $d_5$-$d_{95}$ = 1,2 $\mu$m - 17 $\mu$m) werden in ca. 2L VE-Wasser suspendiert. Im Sauren wird die Suspension bei 75°C unter Rühren mit einer Lösung aus 599 g Titanoxychlorid (400 g/l), 0,38 g Niobpentachlorid und 0,24 g Kaliumchromsulfat-Dodekahydrat tropfenweise versetzt. Durch gleichzeitiges geregeltes Zudosieren von Natronlauge wird der pH-Wert von 2 konstant gehalten. Nach Zugabe der Gesamtmenge der Lösung wird noch 15 min bei 75 °C nachgerührt. Anschließend wird unter Rühren auf Raumtemperatur abgekühlt und die Reaktionsmischung auf einen pH von 5 eingestellt. Das erhaltene Pigment wird über eine Nutsche abfiltriert, mit Wasser gewaschen, bei 110°C getrocknet und 120 min. bei 850°C geglüht. Man erhält ein ockerfarbenes Pigmentpulver. Die erhaltenen Pigmentpartikel weisen Alumosilikat-Hohlkugeln (Teilchengröße <40 $\mu$m) als Träger-partikel und eine darauf haftfest aufgefällte Beschichtung aus mit Niob und Mangan dotiertem Titandioxid auf.

Herstellung eines halbleitfähigen partikulären Füllstoffs B mit gegenüber dem Mikrovaristor-Füllstoff A erhöhter elektrischer Leitfähigkeit:

In einem 5L Rührkessel werden 100 g Glimmer mit einer maximalen Teilchengröße von < 15 $\mu$m in 2L VE-Wasser suspendiert. Bei 75°C werden unter Rühren 590 g einer salzsauren Lösung, die 121 g $SnCl_4$ und 0,273 g $SbCl_3$ enthält, innerhalb von 2 Stunden zudosiert. Der pH-Wert wird durch gleichzeitiges Zudosieren von Natronlauge auf pH= 1,6 konstant gehalten. Nach Beendigung der Zugabe werden bei pH=2 noch 10,6 g einer 40 Gew.-%igen salzsauren Titanoxychloridlösung zugesetzt und eine halbe Stunde bei 75°C nachgerührt. Anschließend wird der pH-Wert mit Natronlauge auf 4 eingestellt und die Suspension auf Raumtemperatur abgekühlt. Das Pigment wird abfiltriert, mit Wasser salzfrei gewaschen, getrocknet und 30 Minuten bei 750°C geglüht. Man erhält 171 g Pigment als weißes glänzendes Pulver. Der Gehalt an Antimon in der Zinnoxidschicht beträgt 0,25 Mol-%, bezogen auf die Summe Sn+Sb. Das Pigment weist einen spezifischen Pulverwiderstand von ca. $10^{12}$ Ohm*cm auf (Messspannung 100 V).

**Beispiel 1:**

Herstellung von Prüfkörpern mit bei Raumtemperatur-vernetzendem Silikon als Polymerkomponente

Der wie oben erhaltene partikuläre Mikrovaristor-Füllstoff A wird zur Herstellung eines Prüfkörpers mit einer Pigmentmassekonzentration von 25 % in ein bei Raumtemperatur vernetzendes Silikonharz eingearbeitet. Ebenfalls mit einer Gesamtmassekonzentration von jeweils 25 % werden darüber hinaus weitere Prüfkörper hergestellt, die neben dem MikrovaristorFüllstoff A einen weiteren Füllstoff B enthalten, der eine geringere elektrische Leitfähigkeit aufweist als der Mikrovaristor-Füllstoff A (3M™ Ceramic Microspheres W-210 der Firma 3M, Partikelgröße $d_{10}$-$d_{90}$ 2-12 $\mu$m). Der prozentuale Anteil von A wird zwischen 25 und 90 % und der prozentuale Anteil von B gegenläufig zwischen 75 und 10 % eingestellt, jeweils bezogen auf die Gesamtmasse A+B.
Die partikulären Füllstoffe werden in einer Dose mit den jeweiligen Anteilen der Komponente 1 eines kommerziellen Raumtemperatur-vernetzendem Silikonharzes RTV-2 (Materialdaten des Herstellers: Komp.1: Komp. 2 = 9:1, Viskosität der Mischung 3500 mPa*s bei 23°C, Shore A Härte 45°) grob vorgemischt und in einem Vakuumspeedmixer (Fa. Hauschild) bei auf 4 mbar reduziertem Druck und 1600 Umdrehungen pro Minute mindestens 2 Minuten lang homogenisiert. Im Anschluss werden die jeweiligen Mengen der Komponente 2 desselben RTV2 Silikonharzes hinzugefügt, die Komponenten wieder grob vorgemischt und mindestens 1 Minute bei 4 mbar und 1600 Umdrehungen pro Minute im Vakuumspeedmixer homogenisiert. Jetzt wird die viskose Masse zügig, unter Einhaltung der Topfzeit, in eine Form vergossen, die die geometrischen Abmessungen des Prüfkörpers vorgibt. Das Silikonharz wird in der Form für mindestens 30 Minuten bei 70°C ausgehärtet. Nach Abkühlen der Form wird die Form geöffnet und der Prüfkörper entnommen und staubfrei gelagert. Die Schichtdicken der vernetzten Prüfkörper liegen zwischen 500 $\mu$m und 600 $\mu$m und werden für jeden der Prüfkörper (Grundfläche kreisförmig, Durchmesser 60 mm) als Mittelwert von zehn Messungen mit einem Wirbelstrom-Schichtdickenmessgerät (Fischer Dualscope FMP30 mit FD10 Sensor gemäß DIN EN ISO 2360) an verschiedenen Stellen ermittelt.
(Anmerkung: Gewöhnlich werden die beiden Komponenten von kommerziellen Raumtemperatur-vernetzenden Silikonharzen RTV-2 von den Herstellern als A und B bezeichnet. Um Verwechslungen mit den partikulären Füllstoffkomponenten gemäß der vorliegenden Erfindung zu vermeiden, werden die Silikonharzkomponenten hier davon abweichend als Komponente 1 und Komponente 2 bezeichnet).
Die Pigmentmassekonzentration PMK ist wie folgt definiert (die flüchtigen Anteile werden nicht ausgewiesen), wird jedoch hier prozentual angegeben:

$$PMK = \frac{m(\text{Füllstoff})}{m(\text{Füllstoff}) + m(\text{Bindemittel})}$$

m= Masse

**Beispiel 2:**

Es werden Prüfkörper wie in Beispiel 1 beschrieben aus mit bei Raumtemperatur-vernetzendem Silikon als Polymerkomponente hergestellt, die jedoch neben dem partikulären Mikrovaristor-Füllstoff A auch den halbleitfähigen partikulären Füllstoff B wie oben in der Herstellvorschrift angegeben enthalten. Die Pigmentmassekonzentration beträgt in jedem Fall 25%. Der prozentuale Anteil von A wird zwischen 25 und 75 % und der prozentuale Anteil von B gegenläufig zwischen 75 und 25 % eingestellt, jeweils bezogen auf die Gesamtmasse A+B.

**Vermessung der Prüfkörper bezüglich ihrer elektrischen Eigenschaften:**

Die Strom-Spannungs-Charakteristik der erzeugten Varistor-Füllstoff / Polymer Prüfkörper wird mit einer Heinzinger 10 kV DC Spannungsquelle (PNChp 10000-20 ump) und einem Kethley pico Amperemeter (6514 System Electrometer) an einer Ringelektrode entsprechend DIN EN 61340-2-3 gemessen.

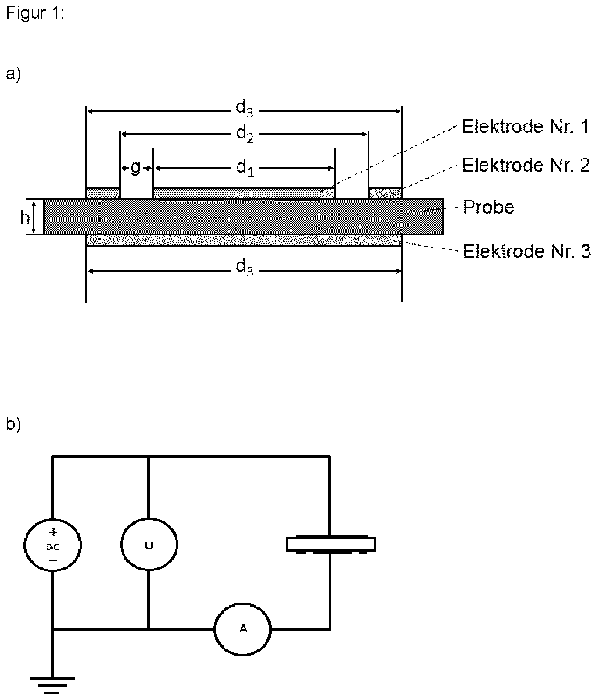

Den schematischen Aufbau der Messvorrichtung sowie die zu beachtenden Maßzahlen des Prüfkörpers zeigt Figur 1.

Zur Normalisierung der Ergebnisse wird, mit den in Figur 1 benannten Abmessungen der Probe und der Elektrode, entsprechend den Formeln (2-4) die elektrische Feldstärke E und die Stromdichte J berechnet:

$$E = V / h \qquad (2)$$

$$J = I / A \qquad (3)$$

$$A = (d_1 + g)^2 * \pi / 4 \qquad (4)$$

V = Spannung in Volt (V)
I = Stromstärke in Ampere (A)
A = effektive Elektrodenfläche ($m^2$)
h = Elektrodenabstand (Probendicke): -0,5 mm
$d_1$-$d_4$ = Elektroden Durchmesser (siehe Figur 1)
$d_1$ = Durchmesser Zentralelektrode: 25 mm
g = Abstand Ring Elektrode zur Zentralelektrode: 2,5 mm

Die spezifischen Widerstände p der Prüfkörper ergeben sich aus der Gleichung p = E/J.

Die Messungen des Stromes werden mit einer stufenförmigen Spannungsrampe bei Raumtemperatur und relativer Luftfeuchte zwischen 20 % und 30 % durchgeführt.

Die entsprechenden Diagramme aller ermittelten E/p-Kennlinien sind in den Figuren 3 (Beispiel 1) und 4 (Beispiel 2) dargestellt.

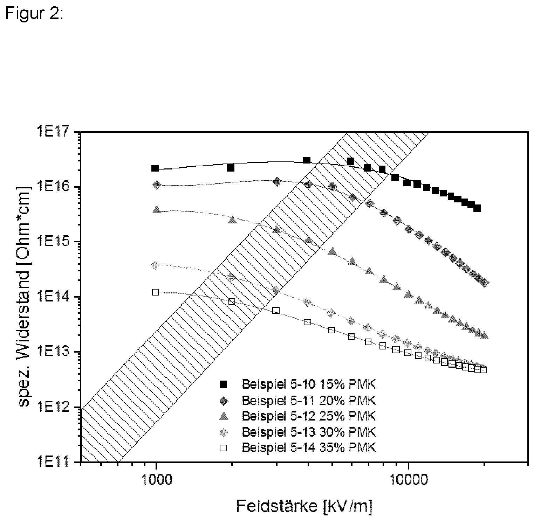

Zum Vergleich ist in Figur 2 das Diagramm von E/p-Kennlinien gezeigt, welche Prüfkörper aus Silikonharzen aufweisen, die lediglich einen partikulären Mikrovaristor-Füllstoff A in steigender Pigmentmassekonzentration enthalten (gemäß den Beispielen 5-10 bis 5-14 aus WO 2021/105319 A1).

**Patentansprüche**

1. Verfahren zur variablen Einstellung der elektrischen Isoliereigenschaften von Varistor-haltigen Kompositmaterialien, wobei eine oder mehrere Masseeinheit(en) eines dielektrischen Polymermaterials bereitgestellt werden und den Masseeinheiten jeweils ein partikulärer Mikrovaristor-Füllstoff A und ein weiterer partikulärer Füllstoff B in einer vordefinierten Gesamtmasse A+B zugesetzt werden, wobei der partikuläre Füllstoff B entweder eine geringere elektrische Leitfähigkeit aufweist als der partikuläre Mikrovaristor-Füllstoff A oder wobei es sich bei dem partikulären Füllstoff B um ein halbleitfähiges partikuläres Material mit einer höheren elektrischen Leitfähigkeit als der des partikulären Mikrovaristor-Füllstoffs A handelt, und wobei in unterschiedlichen Masseeinheiten des Polymermaterials in der Gesamtmasse A+B ein Masseverhältnis A:B im Bereich von 1:99 bis 99:1 jeweils unterschiedlich eingestellt wird, **dadurch gekennzeichnet, dass** die Gesamtmasse A+B im Bereich von 5 bis 35 Gew.-% liegt, bezogen auf das Gesamtgewicht aus einer Masseeinheit des dielektrischem Polymermaterials einschließlich der Gesamtmasse A+B der partikulären Füllstoffe A und B.

2. Verfahren gemäß Anspruch 1, **dadurch gekennzeichnet, dass** die Gesamtmasse A+B, ausgedrückt in Gew.-%, in jeder der Masseeinheiten des Polymermaterials gleich ist, jeweils bezogen auf das Gesamtgewicht aus einer Masseeinheit des dielektrischem Polymermaterials einschließlich der Gesamtmasse A+B der partikulären Füllstoffe A und B.

3. Verfahren gemäß Anspruch 1 oder 2, **dadurch gekennzeichnet, dass** es sich bei dem dielektrischen Polymermaterial um Silikone, Polyurethane, Polyethylene, Epoxide, Phenolharze oder um EPDM handelt.

4. Verfahren gemäß einem oder mehreren der Ansprüche 1 bis 3, **dadurch gekennzeichnet, dass** es sich bei dem partikulären Mikrovaristor-Füllstoff A um einen Füllstoff handelt, welcher aus Trägerpartikeln und einer die Trägerpartikel jeweils umhüllenden Beschichtung besteht, wobei die Trägerpartikel mindestens eine Aluminiumverbindung oder eine Siliziumverbindung enthalten oder jeweils aus dieser bestehen, und wobei die Beschichtung ein mit Niob und mindestens einem weiteren Element dotiertes Titandioxid enthält.

5. Verfahren gemäß Anspruch 4, **dadurch gekennzeichnet, dass** die Trägerpartikel Aluminiumoxid, Siliziumdioxid oder ein Alumosilikat enthalten oder jeweils daraus bestehen.

6. Verfahren gemäß Anspruch 4 oder 5, **dadurch gekennzeichnet, dass** die Trägerpartikel aus Aluminiumoxid, Siliziumdioxid, Mullit, Flugasche, Kaolinit, Bimsstein oder Perlit bestehen.

7. Verfahren gemäß einem oder mehreren der Ansprüche 4 bis 6, **dadurch gekennzeichnet, dass** das Titandioxid neben Niob mit mindestens einem weiteren Element, ausgewählt aus der Gruppe bestehend aus Mn, Cr, Ce, V, Co, Fe, Zn, Sn, Y, Zr, Ta, Ca, Sr und Ba, dotiert ist.

8. Verfahren gemäß Anspruch 7, **dadurch gekennzeichnet, dass** das Titandioxid neben Niob mit mindestens einem weiteren Element, ausgewählt aus der Gruppe bestehend aus Mn, Cr und Ce, dotiert ist.

9. Verfahren gemäß einem oder mehreren der Ansprüche 1 bis 8, **dadurch gekennzeichnet, dass** der partikuläre Mikrovaristor-Füllstoff A eine mittlere Partikelgröße im Bereich von 1 bis 150 $\mu$m aufweist.

10. Verfahren gemäß einem oder mehreren der Ansprüche 1 bis 9, **dadurch gekennzeichnet, dass** es sich bei dem partikulären Füllstoff B um ein halbleitfähiges partikuläres Material handelt, welches eine höhere elektrische Leitfähigkeit aufweist als der partikuläre Mikrovaristor-Füllstoff A und einen spezifischen Pulverwiderstand im Bereich von $10^8$ bis $10^{12}$ Ohm*cm aufweist.

11. Verfahren gemäß einem oder mehreren der Ansprüche 1 bis 9, **dadurch gekennzeichnet, dass** der partikuläre Füllstoff B eine niedrigere elektrische Leitfähigkeit aufweist als der partikuläre Mikrovaristor-Füllstoff A und einen spezifischen Pulverwiderstand im Bereich von $\geq 10^{14}$ Ohm*cm aufweist.

**Claims**

1. Process for the variable setting of the electrical insulation properties of varistor-containing composite materials, where one or more mass unit(s) of a dielectric polymer material are provided and in each case a particulate microvaristor filler A and a further particulate filler B in a predefined total mass A+B are added to the mass units, where the particulate filler B either has a lower electrical conductivity than the particulate microvaristor filler A or where the particulate filler B is a semiconductive particulate material having a higher electrical conductivity than that of the particulate microvaristor filler A, and where a mass ratio A:B in the range from 1:99 to 99:1 is in each case set differently in different mass units of the polymer material in the total mass A+B, **characterised in that** the total mass A+B is in the range from 5 to 35% by weight, based on the total weight of a mass unit of the dielectric polymer material including the total mass A+B of the particulate fillers A and B.

2. Process according to Claim 1, **characterised in that** the total mass A+B, expressed in % by weight, is the same in each of the mass units of the polymer material, in each case based on the total weight of a mass unit of the dielectric polymer material including the total mass A+B of the particulate fillers A and B.

3. Process according to Claim 1 or 2, **characterised in that** the dielectric polymer material comprises silicones, polyurethanes, polyethylenes, epoxides, phenolic resins or EPDM.

4. Process according to one or more of Claims 1 to 3, **characterised in that** the particulate microvaristor filler A is a filler which consists of support particles and a coating surrounding each of the support particles, where the support particles comprise or in each case consist of at least one aluminium compound or one silicon compound, and where the coating comprises a titanium dioxide doped with niobium and at least one further element.

5. Process according to Claim 4, **characterised in that** the support particles comprise or in each case consist of aluminium oxide, silicon dioxide or an aluminosilicate.

6. Process according to Claim 4 or 5, **characterised in that** the support particles consist of aluminium oxide, silicon dioxide, mullite, fly ash, kaolinite, pumice stone or perlite.

7. Process according to one or more of Claims 4 to 6, **characterised in that** the titanium dioxide is doped, besides niobium, with at least one further element selected from the group consisting of Mn, Cr, Ce, V, Co, Fe, Zn, Sn, Y, Zr, Ta, Ca, Sr and Ba.

8. Process according to Claim 7, **characterised in that** the titanium dioxide is doped, besides niobium, with at least one further element selected from the group consisting of Mn, Cr and Ce.

9. Process according to one or more of Claims 1 to 8, **characterised in that** the particulate microvaristor filler A has an average particle size in the range from 1 to 150 $\mu$m.

10. Process according to one or more of Claims 1 to 9, **characterised in that** the particulate filler B is a semiconductive particulate material which has a higher electrical conductivity than the particulate microvaristor filler A and has a specific powder resistance in the range from $10^8$ to $10^{12}$ ohm*cm.

11. Process according to one or more of Claims 1 to 9, **characterised in that** the particulate filler B has a lower electrical conductivity than the particulate microvaristor filler A and has a specific powder resistance in the range $\geq 10^{14}$ ohm*cm.

**Revendications**

1. Procédé destiné au réglage variable des propriétés d'isolation électrique de matériaux composites contenant des varistances, dans lequel une ou plusieurs unités de masse d'un matériau polymère diélectrique sont prévues et dans chaque cas une charge de microvaristance particulaire A et une autre charge particulaire B, selon une masse totale A+B prédéfinie, sont ajoutées aux unités de masse, où la charge particulaire B présente une conductivité électrique inférieure à celle de la charge de microvaristance particulaire A, ou bien la charge particulaire B est un matériau particulaire semi-conducteur ayant une conductivité électrique supérieure à celle de la charge de microvaristance particulaire A, et où un rapport massique A:B dans la plage allant de 1:99 à 99:1 est dans chaque cas défini différemment dans des unités de masse différentes du matériau polymère dans la masse totale A+B, **caractérisé en ce que** la masse totale A+B se trouve dans la plage allant de 5 à 35% en poids, sur la base du poids total d'une unité de masse du matériau polymère diélectrique comportant la masse totale A+B des charges particulaires A et B.

2. Procédé selon la revendication 1, **caractérisé en ce que** la masse totale A+B, exprimée en % en poids, est la même dans chacune des unités de masse du matériau polymère, dans chaque cas sur la base du poids total d'une unité de masse du matériau polymère diélectrique comportant la masse totale A+B des charges particulaires A et B.

3. Procédé selon la revendication 1 ou 2, **caractérisé en ce que** le matériau polymère diélectrique comprend des silicones, des polyuréthanes, des polyéthylènes, des époxydes, des résines phénoliques ou de l'EPDM.

4. Procédé selon l'une ou plusieurs parmi les revendications 1 à 3, **caractérisé en ce que** la charge de microvaristance particulaire A est une charge qui est constituée de particules de support et d'un revêtement entourant chacune des particules de support, les particules de support comprenant ou étant constituées dans chaque cas d'au moins un composé d'aluminium ou d'un composé de silicium, et le revêtement comprenant un dioxyde de titane dopé avec du niobium et au moins un autre élément.

5. Procédé selon la revendication 4, **caractérisé en ce que** les particules de support comprennent ou sont constituées dans chaque cas d'oxyde d'aluminium, de dioxyde de silicium ou d'un aluminosilicate.

6. Procédé selon la revendication 4 ou 5, **caractérisé en ce que** les particules de support sont constituées d'oxyde d'aluminium, de dioxyde de silicium, de mullite, de cendres volantes, de kaolinite, de pierre ponce ou de perlite.

7. Procédé selon l'une ou plusieurs parmi les revendications 4 à 6, **caractérisé en ce que** le dioxyde de titane est dopé, outre avec du niobium, avec au moins un autre élément choisi dans le groupe constitué par Mn, Cr, Ce, V, Co, Fe, Zn, Sn, Y, Zr, Ta, Ca, Sr et Ba.

8. Procédé selon la revendication 7, **caractérisé en ce que** le dioxyde de titane est dopé, outre avec du niobium, avec au moins un autre élément choisi dans le groupe constitué par Mn, Cr et Ce.

9. Procédé selon l'une ou plusieurs parmi les revendications 1 à 8, **caractérisé en ce que** la charge de microvaristance particulaire A présente une taille moyenne de particules dans la plage allant de 1 à 150 $\mu$m.

10. Procédé selon l'une ou plusieurs parmi les revendications 1 à 9, **caractérisé en ce que** la charge particulaire B est un matériau particulaire semi-conducteur qui présente une conductivité électrique supérieure à celle de la charge de microvaristance particulaire A et présente une résistance spécifique de la poudre dans la plage allant de $10^8$ à $10^{12}$ ohm*cm.

11. Procédé selon l'une ou plusieurs parmi les revendications 1 à 9, **caractérisé en ce que** la charge particulaire B présente une conductivité électrique inférieure à celle de la charge de microvaristance particulaire A et présente une résistance spécifique de la poudre dans la plage $\geq 10^{14}$ ohm*cm.

Figur 1:

a)

b)

Figur 2:

Figur 3:

Figur 4:

**EP 4 244 875 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2021105319 A1

- US 4726991 A